Europäisches Patentamt

European Patent Office

Office européen des brevets

(19)

(11) Publication number: 0 265 603
A2

(12)                    **EUROPEAN PATENT APPLICATION**

(21) Application number: 87111399.9

(22) Date of filing: 06.08.87

(51) Int. Cl.⁴: **B29C 45/00** , B29C 45/43 , B29C 45/12

(30) Priority: 31.10.86 GB 8626096

(43) Date of publication of application:
04.05.88 Bulletin 88/18

(84) Designated Contracting States:
AT BE CH DE ES FR GB GR IT LI LU NL SE

(71) Applicant: Hadley, Phillip Arthur
28 Carlton Avenue
Streetley West Midlands(GB)

(72) Inventor: Hadley, Phillip Arthur
28 Carlton Avenue
Streetley West Midlands(GB)

(74) Representative: Lally, William et al
FORRESTER & BOEHMERT
Widenmayerstrasse 4/I
D-8000 München 22(DE)

(54) Method of moulding and injection moulding machine.

(57) A method of moulding an article (particularly a fence post) from plastics material conveniently involves the use of an injection moulding machine comprising an outlet manifold (6) which in use is connected to the outlet orifice of an extruder, around which a distribution manifold (10) is provided, which is generally annular in form, and which is provided with a plurality of injection channels (12). In use the distribution manifold (10) rotates, such that plastics material is supplied to each injection channel (12) sequentially, and therefrom to an inlet member (16), to each of which a mould (18) is connected. Heating means (20) is provided to heat the outlet manifold (6) and distribution manifold (10) whilst cooling means (22) is provided to cool the inlet members (16), and at least a portion of each mould (18) adjacent to the inlet member.

When the outlet manifold (6) has completed 360° rotation, further plastics material is injected through the injection channel (12) towards the inlet passage (17) of the first mould. The solidified material within the inlet passage (17) acts as a plunger and transmits the injection pressure longitudinally towards the body of plastics material within the mould cavity, and outwardly towards the outer surface thereof, forcing the article from the mould cavity.

FIG. 2

## "Method of moulding and injection moulding machine"

During a large number of injection moulding processes, scrap material is produced. Some scrap material is of a quality which allows it to be re-used immediately, whilst other scrap material is capable of re-used subsequent to a treatment operation, such as comminution.

However there is a large quantity of scrap material available, commonly known as "ditry scrap" which has hitherto been incapable of being utilised.

Such material may be contaminated with dirt, brick dust, wood shavings, gravel or the like.

In addition expense has been encountered in attempts to mould articles of inexpensive plastics material, such as in the substitution of plastics material for wood. Thus difficulty is encountered in the convenient moulding of elongate articles of generally uniform cross-section, such as posts and poles, of plastics material in a manner which allows them to be produced ecomonically, and hence competitively with articles produced from wood.

According to this invention there is provided a method of moulding an article from plastics material wherein a moulded article is pushed from the mould by fluid moulding material injected into the cavity to form another article.

According to this invention there is also provided a method of moulding an article from plastics material, wherein fluid plastics material is delivered through a passage to a mould cavity in the shape of the article to be moulded, the mould cavity being elongate and of generally uniform cross-section, a moulded article being force from the mould by the material which is injected into the cavity to form the next subsequent article.

This method is particularly useful for the moulding of generally elongate articles of substantially uniform cross-section, particarly in circumstances where the quality of the surface finish is not highly critical. Thus the invention is particularly useful for the moulding of articles of scrap plastics material of a quality which hitherto has been unusable, for items such as posts, poles or the like.

The mould may be provided by a hollow tubular member, connected at one end of an inlet manifold, the other end conveniently being open, although a removable end cap may be used if desired, particuarly for the moulding of the first article.

According to this invention there is also provided an injection moulding machine for moulding of articles of plastics material, comprising an outlet member, to which fluid plastics material is supplied by injection mechanism, a distribution device which extends around the outlet member, said distribution device comprising a plurality of distribution channels, the outlet members and the distribution device being relatively rotatable, a plurality of inlet members, one connected to each distribution channel, and a plurality of moulds, one connected to each inlet member, the outlet members and the distribution device being heated and the inlet members being cooled.

By the heating of the outlet member and distribution device, plastics material in the distribution channels may be maintained fluid during the injection sequentially into the mould cavities. By the cooling of the inlet member, a sprue or plug which is connected to the body of fluid moulding material in the mould cavity may be solidified between injection cycles to act as a plunger so that an article which has been moulded may be forced from the mould cavity under the pressure of injection of the moulding material to form the next succeeding article.

There will now be given a detailed description, to be read with reference to the accompanying drawings, of an injection moulding machine, and a method of injection moulding, both of which have been selected for the purposes of illustrating the invention by way of example.

In the accompanying drawings:

FIGURE 1 is a horizontal sectional view illustrating the injection moulding machine which is the preferred embodiment of the invention; and

FIGURE 2 is a vertical sectional view, taken on the line 2-2 of Figure 1; and

The injection moulding machine which is the preferred embodiment of this invention comprises an outlet manifold 6, which in use is connected to the outlet orifice of an extruder (not shown), the outlet manifold being provided with a passage 8 extending to a periperhal circumferential surface 9 thereof.

Extending around the outlet manifold 6 is a distribution manifold 10, which is generally annular in form, and which is provided with a plurality specifically eight, distribution or injection channels 12.

The outlet manifold 6 and distribution manifold 10 are mounted for relative rotative movement, such that in use, the plastics moulding material is supplied to each injection channel 12 sequentially. In the preferred embodiment the manifold 10 is static, and the outlet manifold 6 rotates.

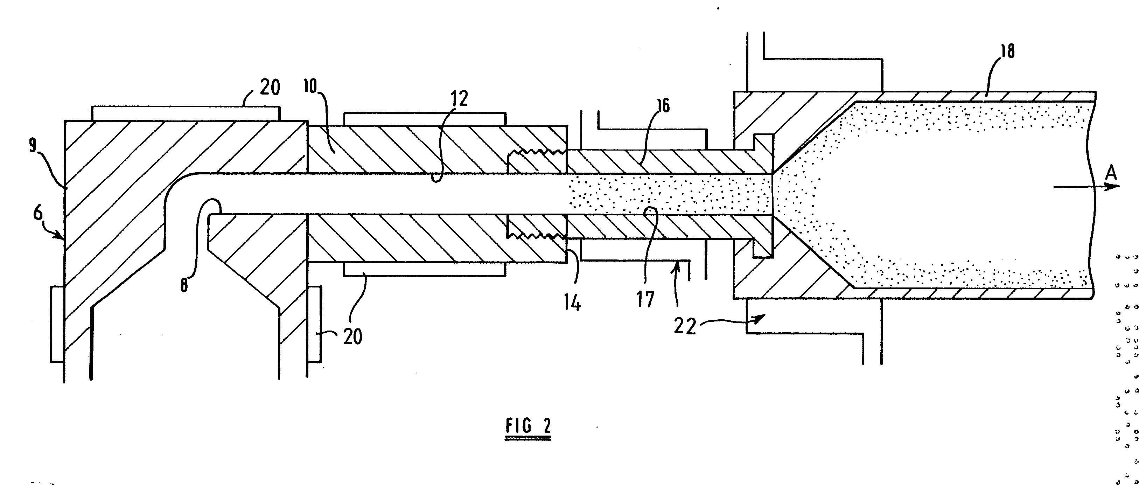

The injection channels 12 exit from the distribution manifold through a circumferential surface 14 thereof, within which, over each injection channel 12, an inlet member 16 is secured (see also Figure 2). Connected to each inlet member 16 is a

2

mould 18, the mould being conveniently screwed onto the inlet member or alternatively secured to the outlet member by a bayonet-type interfitment. The mould member 18 is in the form of an elongate tube of uniform cross-section, and, apart from end formations is provided by readily available welded tube.

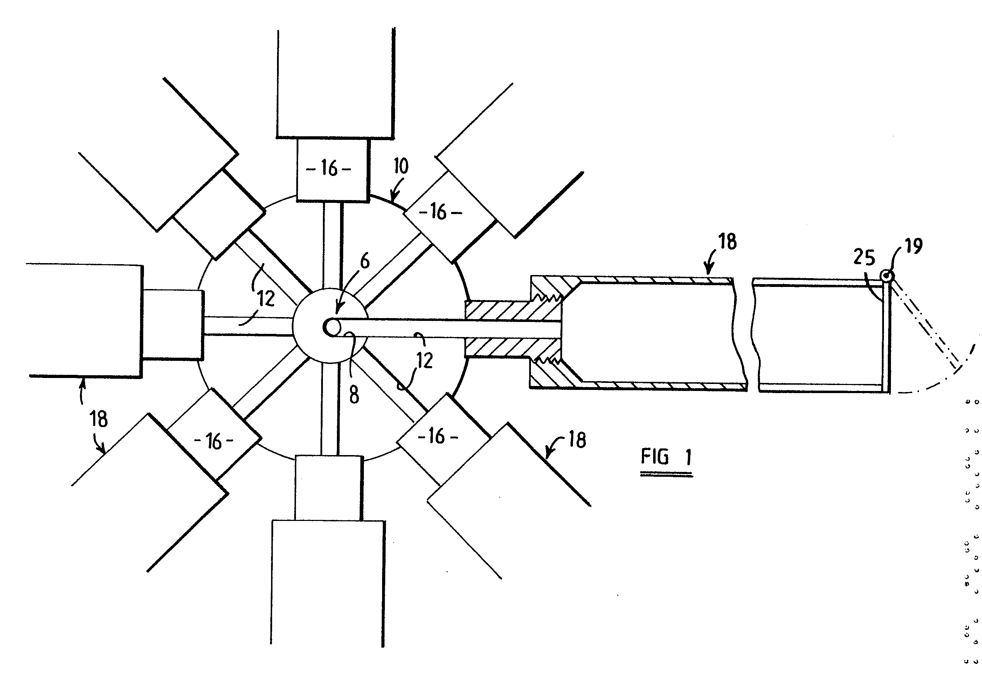

Mounted over an end of each of the moulds 18 is a closure gate 25, conveniently pivotally mounted on the mould such as by a pivot 19 for movement between a closed position (shown in full lines in Figure 1) and an open position shown in dotted lines. If desired power mechanism (not shown) may be utilised to move the gate 25 between said positions, and to hold the gate in its closed position during filling of the mould with plastics material.

Heating means 20 is provided, to heat the outlet manifold 6 and the distribution manifold 10, whilst cooling means 22 is provided to cool the inlet members 16, and at least a portion of each mould 18 adjacent to the outlet member.

In the use of the injection moulding machine, with the outlet manifold in the rotative position shown in Figure 1, fluid plastics material may be injected through the distribution manifold 10, and through the inlet passage 17 of the inlet member 16 shown, and into the mould cavity to fill the mould cavity. Thereafter the outlet manifold 6 is rotated to inject fluid plastic material into the next succeeding mould cavity.

The heating devices 20 maintain the distribution manifold hot, and hence the plastics material in each injection channel in fluid condition. However the plastics material in the inlet passage 17 is cooled by the cooling means 20, and forms a relative solid plug. Simultaneously the body of plastics material with the mould 18 will commence to solidify from the outside surface, providing a skin adjacent to the outer surface of the article being mould. Contraction of the body of plastics material will also tend to pull the body of plastics material away from some at least of surfaces of the mould.

The distribution of cooled plastics material at the onset of the next moulding cycle involving the said mould 18 is indicated by the stippling in Figure 2.

Thus when the outlet manifold 6 has completed 360° rotation, further plastics material is injected through the injection channel 12 towards the inlet passage 17. The solified material within the inlet passage 17 acts as a plunger and transmits the injection pressure longitudinal towards the body of plastics material within the mould cavity, and outwardly towards the outer surface thereof, forcing the article from the mould cavity, in the direction of the arrow A.

Thus in use, with the gate 25 held closed by power mechanism or clamping mechanism, the mould cavity is filled with fluid moulding material, air conveniently escaping from the mould through small gaps between the gate and the side walls of the mould. On completion of filling of the mould, a dwell time occurs, during which the other moulds of the machine are filled.

Immediately prior to the further injection of moulding material into the said mould 18, the gate 25 is opened, and the force of moulding material injected into the inlet passage 17 forces the solidified material in the mould in the direction A.

On the emergence of a short portion of the moulded article from the mould 18, the moulded article may be grasped, either by hand or by traction mechanism, to pull the moulded article from the mould. Thereupon the gate 25 may be closed again, whilst the cavity of the mould 18 is filled, and the sprue corresponding to the passage 17 severed from the moulded article.

Alternatively the moulded article may be severed immediately prior to completion of emergence from the mould 18, by a guillotine, which affords a gate for the retention of moulding material affording the next moulded article.

In this manner articles such as fence and gate posts, the surface finish of which is not critical, may be moulded inexpensively from material which otherwise would not have been capable of being used, and allow such items to be moulded sufficiently inexpensively to be competitive with articles produced from wood.

Desirably both the inlet passage 17, and the interior surface of the mould 18, are tapered by a small amount, the taper out flaring in the direction fo the arrow A, such as by 0.1° or less. In this manner movement of the solidified moulding material from the passage 17 and from the mould cavity 18 is assisted. It is however to be appreciated that, despite such flaring, the mould cavity may still be considered to be of substantially uniform cross-section.

In a modification of the machine which is the preferred embodiment of the invention, rather than the moulds being arranged radially of the distribution device, the distribution device is utilised to feed a bank of moulds arranged in a 2 x 4 array.

The features disclosed in the foregoing description, or the accompanying drawings, expressed in their specific forms or in terms of a means for performing the disclosed function, or a method or process for attaining the disclosed result, or a class or group of sustances or compositions, as appropriate, may, separately or in any combination of such features, be utilised for realising the invention in diverse forms thereof.

## Claims

1. A method of moulding an article from plastics material wherein a moulded article is pushed from the mould by fluid moulding material injected into the cavity (18) to form another article.

2. A method of moulding an article from plastics material, wherein fluid plastics material is delivered through a passage (17) to a mould cavity (18) in the shape of the article to be moulded, the mould cavity being elongate and of generally uniform cross-section, a moulded article being forced from the mould by the material which is injected into the cavity (18) to form the next subsequent article.

3. A method according to one of Claims 1 and 2 wherein the mould cavity is of substantially uniform cross-section.

4. A method according to any one of the preceding claims wherein the mould (18) is provided by a hollow tubular member, connected at one end to an inlet manifold (16).

5. An injection moulding machine for moulding of articles of plastics material, comprising an outlet member (6), to which fluid plastics material is supplied by injection mechanism, a distribution device (10) which extends around the outlet member (6), said distribution device comprising a plurality of distribution channels (12), the outlet member (6) and the distribution device (10) being relatively rotatable, a plurality of inlet members (16), one connected to each distribution channel (12), and a plurality of moulds (18), one connected to each inlet member (16), the outlet members and the distribution device being heated and the inlet members being cooled.

6. An injection moulding machine according to Claim 5 wherein the moulds (18) are each elongate, of generally uniform cross-section.

7. A method of moulding an article from plastics material, when carried out substantially as hereinbefore described with reference to the accompanying drawings.

8. A method of moulding a fence post when carried out substantially as hereinbefore described with reference to the accompanying drawings.

9. An injection moulding machine constructed and arranged substantially as hereinbefore described with reference to the accompanying drawings.

10. Any novel feature or novel combination of features described herein and/or illustrated in the accompanying drawings.

FIG 1

0 265 603

FIG 2

0 265 603